# EUROPEAN PATENT APPLICATION

(11) **EP 1 431 301 A1**
(43) Date of publication of application: **23.06.2004**
(21) Application number: 02258930.3
(22) Date of filing: 20.12.2002
(51) Int. Cl.: C07F 7/18, C07F 7/08

(54) **Process for the production of silyl carboxylate monomers**

(71) Applicant: SIGMA COATINGS B.V., 1422 AD Uithoorn (NL)
(72) Inventor: The designation of the inventor has not yet been filed
(74) Representative: Walsh, David Patrick

(57) **Abstract**

A process for the production of hydrocarbyl silyl unsaturated carboxylates of formula (I) is described, 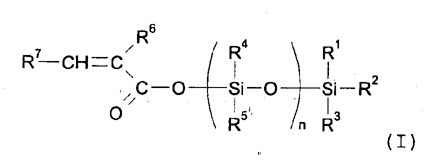 wherein n represents a number of dihydrocarbylsiloxane units from 0 to 1000.

The process includes the reaction of an unsaturated carboxylic acid of formula (II) 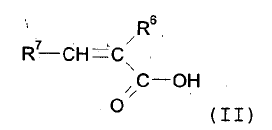 with a hydrocarbyl silyl compound of formula (III) 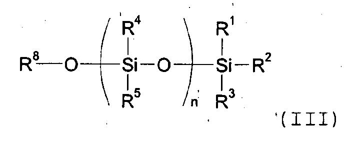 the said reaction being carried out in the presence of a silaphilic catalyst.

## Description

The present invention relates to the production of silyl carboxylate by a surprising new route.

Silyl carboxylates are useful as monomers or co-monomers in the production of metal-free binders for self polishing antifouling paints as, for instance, disclosed in EP-A-1127902. Antifouling paints are widely used to improve the performance of ships by preventing the growth of marine organisms on the sub-marine parts of ship's hulls. Binders containing metals such as tin have been widely used since the 1960's but research has shown that the organotin tributyl tin (TBT) causes environmental problems such as deformations in oysters and sex changes in whelks. Silyl carboxylates derived binders are an important replacement for such tin-based systems. Accordingly, the economic production of silyl carboxylate monomers will make an important contribution to such systems.

Some of the polymers used in the above-described antifouling paints are based on silylated carboxylate monomers.

Several processes are known as conventional techniques for the synthesis of said silylated carboxylate monomers.

EP 1260513 relates to a process for the preparation of trialkylsilylated carboxylate monomers from hexaalkyldisilylsulfates and metallic salts of unsaturated carboxylic acids.

JP 5306290 A describes a process to obtain a methacrylic functional group-containing organosilicon compound. The process comprises reacting methacrylic acid with a halogenoalkylsilane (e.g. trialkylsilylchloride) in the presence of a tertiary amine compound having a cyclic structure. This process has disadvantages such as the reduced availability and storage stability of the silyl chloride. Moreover, the reaction yields as a by-product a hydrogen halide (which provokes the corrosion of the production equipment) or a halide salt (which has to be removed by filtration).

The synthesis of trimethylsilyl methacrylate from methacrylic acid and hexamethyldisilazane is described in A.Chapman & A.D.Jenkins J.Polym.Sci. Polym.Chem.Edn. vol 15, p.3075 (1977).

JP 10195084 A discloses the reaction of unsaturated carboxylic acid such as acrylic acid or methacrylic acid with a trialkylsilylhydride compound in the presence of a copper catalyst. One of the disadvantages of this method is the risk of hydrogenation of the unsaturated carboxylic acid due to a side reaction of the produced H2 on the carbon-carbon double bond.

Reaction mechanisms of nucleophilic attack at silicon have been disclosed in the literature. Bassindale et al, The Chemistry of Organic Silicon Compounds, chapter 13, J Wiley & Sons 1989, discloses extensive reaction mechanisms for silicon. However, the nucleophilic reaction mechanisms relate to halo substituted silicon type compounds and these are encouraged by the halogen leaving group.

EP 056108A1 (Dow Corning Corporation) discloses the acid catalysed reaction of alkoxysilanes with carboxylic acids to produce alkyl carboxylates and disiloxanes.

Nakao et al, Bulletin of the Chemical Society Japan, 54, 1267-1268 (1981) discloses the esterification of carboxylic acids with alcohols in the presence of trimethyl chlorosilane. The reaction is said to proceed via the intermediate alkoxy trimethyl silane and produces the alkyl ester in high yield together with disiloxane. The yields of methyl acetate are 96-98%.

It is one of the objects of the present invention to provide a process for the production of silyl carboxylates.

It is a further object of the present invention to provide a more convenient and efficient process for the production of silyl carboxylates.

According to a first aspect of the present invention there is provided a process for the production of hydrocarbyl silyl unsaturated carboxylates of formula (I). 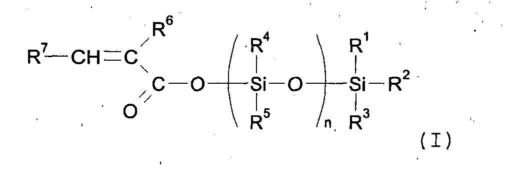 wherein
R¹, R², R³, R⁴, R⁵ each independently represent hydrogen, hydroxyl, alkyl, alkenyl, alkynyl, alkoxyl, aryl, aryloxyl, aralkyloxyl, -O-SiR¹R²R³, -O-(SiR⁴R⁵O)ₙ-SiR¹R²R³ or aralkyl radical optionally substituted by one or more substituents independently selected from the group comprising alkyl, alkoxyl, aralkyl, aralkyloxyl, aryl, aryloxyl, hydroxyl, halogen, amino or amino alkyl radicals, or may independently be an -O-C(O)-C(R⁶)=CHR⁷ group;
R⁶ represents a hydrogen atom, or an alkyl group, or (-R⁸-)ₒ C(O)OR¹⁰ wherein R¹⁰ represents an hydrogen atom, -(SiR⁴R⁵O)ₙ-SiR¹R²R³ wherein R¹, R², R³, R⁴, R⁵ are as already defined or an alkyl group; wherein R⁸ is independently selected from alkyl, alkenyl, alkynyl, aryl or an aralkyl radical optionally substituted by one or more substituents independently' selected from alkyl, alkenyl, alkynyl, aralkyl, aryl, hydroxyl, halogen, amino or amino alkyl radicals; O=0 or 1;
R⁷ represents a hydrogen atom, or independently represents alkyl, aryl, aralkyl, alkenyl, alkynyl radical optionally substituted with the same radicals as defined for R⁶ above or R⁷ represents -COOR⁹ wherein R⁹ represents an hydrogen atom, an alkyl group or -(SiR⁴R⁵-O)ₙ- SiR¹R²R³ wherein R¹, R², R³, R⁴ and R⁵ are as already defined;
by reaction of an unsaturated carboxylic acid of formula (II) 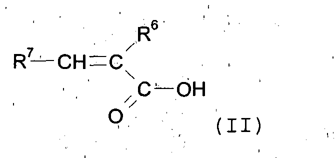 wherein R⁶ and R⁷ in formula (II) are as defined above; with a hydrocarbyl silyl compound of formula (III) 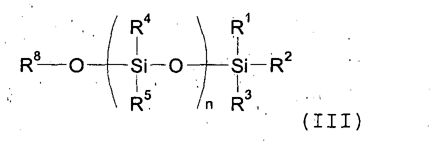 wherein R¹, R² , R³, R⁴ and R⁵ are as defined above and R⁸ is an hydrogen atom, an alkyl, aralkyl or aryl, alkenyl or alkynyl group optionally substituted with one or more substituents selected from the equivalent substituents as detailed for R¹-R⁵ above; and each n above independently represents a number of dihydrocarbylsiloxane units from 0 to 1000; the said reaction being carried out in the presence of a silaphilic catalyst.

Preferably, wherein when R¹⁰ represents alkyl or hydrogen in formula II, it represents -(SiR⁴R⁵O-)ₙSiR¹R²R³ in formula I, wherein n and R¹-R⁵ are as defined previously.

Preferably, wherein when R¹, R², R³, R⁴ or R⁵ are aryloxyl, alkaryloxyl, alkoxyl or hydroxyl in formula III, they may represent -O-C(O)-C(R⁶)=CHR⁷ in formula I.

Preferably, where R⁹ represents an alkyl group or an hydrogen atom in formula (II), it may represent -(SiR⁴R⁵O)ₙ-SiR¹R²R³ in formula (I).

Preferably, the silaphilic catalysts are selected from fluoride containing mineral or organic salts which comprise, but are not limited to, sodium fluoride, potassium fluoride, caesium fluoride or tetrabutyl ammonium fluoride (Bu₄NF); or are selected from N-methyl imidazole(NMI), N,N-dimethylamino pyridine(DMAP), hexamethylphosphoric triamide(HMPA), 4,4 dimethyl imidazole, N-methyl-2-pyridone(NMP), pyridine N-oxide, triphenylphosphine oxide, 2,4 dimethyl pyridine, N-methyl-4-pyridone, dimethyl formamide(DMF), 3,5 dimethyl pyridine, N,N-dimethylethylene Urea(DMEU), N,N-dimethylpropylene Urea(DMPU), pyridine, imidazole, trimethylamine, dimethyl sulphoxide(DMSO), N-methyl pyrrolidinone(NMP), formamide, N-alkylformamides, N,N-dialkylformamides, acetamide, N-alkylacetamides, N,N-dialkylacetamides, alkylcyanides, N-methyl pyrrolidone, p-dimethylaminobenzaldehyde, 1,2-dimethyl imidazole, LiOH, LiStearate, NaI, MeONa or MeOLi; the term alkyl in the above N-alkyl and N,N-dialkyl .... amides and cyanides include any linear, cyclic, bicyclic, polycyclic, alkyl aliphatic or aromatic group and in the case of N,N-compounds the alkyl may be the same or different, an example is N-formyl Rosinamine.

Silaphilic catalysts have been defined as molecules having a special affinity for silicon - Brook, Silicon in Organic, Organometallic and Polymer Chemistry section 5.5, J Wiley & Sons 2000. Preferably, the silaphilic catalysts have an electron rich heteroatom such as oxygen or nitrogen. Typically, the hetero atom is substituted with electron donating groups.

Lewis acid catalysts may also be used to catalyse the process of the present invention. Accordingly, for the purposes of the present invention, the term "silaphilic catalyst" should be taken as incorporating Lewis acid catalysts such as titanium butoxide Ti(OBu)₄.

Said catalyst may, for example, be a metal alkoxide, an organic tin compound such as dibutyltin dilaurate, dibutyltin dioctiate or dibutyltin diacetate, or a boron compound such as boron butoxide or boric acid. Illustrative examples of metal alkoxide include aluminum triethoxide, aluminum triisopropoxide, aluminum tributoxide, aluminum tri-sec-butoxide, aluminum diisopropoxy-sec-butoxide, aluminum diisopropoxyacetyl acetonate, aluminum di-sec-butoxyacetyl acetanoate, aluminum diisopropoxyethyl acetoacetate, aluminum di-sec-butoxyethylacetoacetate, aluminum trisacetyl acetonate, aluminum trisethylaceto acetate, aluminum acetylacetonate bisethylacetoacetate, titanium tetraethoxide, titanium tetraisopropoxide, titanium (IV) butoxide, titanium diisopropoxybisacetyl acetonate, titanium diisopropoxybisethyl acetoacetate, titanium tetra-2-ethylhexyloxide, titanium diisopropoxybis(2-ethyl-1,3-hexanediolate), titanium dibutoxybis(triethanolaminate), zirconium tetrabutoxide, zirconium tetraisopropoxide, zirconium tetramethoxide, zirconium tributoxide monoacetylacetonate, zirconium dibutoxide bisacetylacetonate, zirconium butoxide trisacetylacetonate, zirconium tetraacetylacetonate, zirconium tributoxide monoethylacetoacetate, zirconium dibutoxide bisethylacetoacetate, zirconium butoxide trisethylacetoacetate and zirconium tetraethylacetoacetate. In addition to these compounds, cyclic 1,3,5-triisopropoxycyclotrialuminoxane and the like can also be used and is thereby incorporated within the definition of "silaphilic catalyst".

Preferably, in compounds of formula I, the number of (alk)acryloyl groups is less than 4, more preferably, less than 3, most preferably 1.

Advantageously, although the prior art describes the reaction of alkoxysilanes with carboxylic acid as leading to the corresponding alkylcarboxylates and the silanol (path A), the latter tending to dehydrate to form disiloxanes. It has been surprisingly discovered that the use of a silaphilic catalyst (ie. a catalyst able to coordinate in a reversible manner with the silicon atom) allows preferential substitution of alkoxy or hydroxyl groups by the carboxy group (path B).

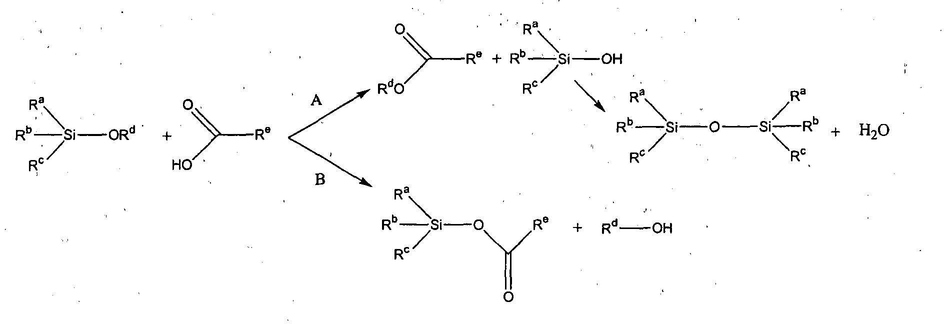

Advantageously, the process of the present invention results in the release of harmless by-products, namely water and methanol.

More preferably, the silaphilic catalyst is a catalyst capable of facilitating a penta or hexa coordinated silicon species in the transition state of the reaction.

More, preferably, the silaphilic catalysts are independably selected from

DMF, DMSO, formamide, N-alkylformamides, N,N-dialkylformamides, acetamide, N-alkylacetamides, N,N-dialkylacetamides, N-Methyl pyrrolidone, p-dimethylaminobenzaldehyde, DMAP, N-methyl imidazole, 1,2-dimethyl imidazole, HMPA, DMPU, NaI, MeONa, MeOLi, Bu4NF, Ph3PO, LiOH, LiStearate and pyridine N-oxide.

The catalysts may be homogenous or heterogenous but preferably, are homogenous and present in a free form in the reaction medium. Alternatively, the catalysts may be bonded to a polymeric support.

Particularly preferred catalysts are independably selected from

DMF, formamide, N-alkyl formamide, N,N-dialkylformamide, Bu₄NF.

Preferably, the catalysts are present at a level of 0.001-100 mol% (mol/mol silane), more preferably 0.01-40 mol%, most preferably, 0.1-30 mol% in the reaction medium at the start of the reaction. Especially preferred is a range of 20-30 mol% for the formamides or 0.1-1mol% for Bu₄NF.

Preferably, the reaction includes a polymeric inhibitor. A suitable polymerisation inhibitor is o-methoxyphenol.

Preferably, the reaction is carried out in a suitable solvent.

Suitable solvents which can be used in the process of the invention include non polar inert solvents, aliphatic hydrocarbons, cyclic and non cyclic ethers.

Suitable solvents may be independently selected from pentane, hexane, heptane, toluene, xylene, benzene, mesitylene, ethylbenzene, octane, decane, decahydronaphthlene, diethyl ether, diisopropyl ether, diisobutyl ether or mixtures thereof.

Especially preferred solvents are those which allow reactive distillation ie. which cause no distillation of any of the reactants but which allow preferential distillation of one of the products to drive the equilibrium to the right.

More especially preferred solvents are those which form a low boiling azeotrope with the distilled R⁸OH. Still more especially preferred solvents are those which form a hetergenous low boiling azeotrope with the distilled R⁸OH.

Most preferably, the solvents are independently selected from pentane, hexane, heptane, toluene and xylene.

Preferably, the temperature of the reaction depends on the boiling point of the azeotrope that has to be distilled, the shape of the reactor and the height of the distillation column.

Typically, the reaction is carried out in the range 0°C - 200°C, more preferably, 60-170°C, most preferably, 110-140°C.

Preferably, the polymerisation inhibitor is present in the range 0.001-10% wt/wt of the total reaction mix, more preferably 0.001-5% wt/wt and most preferably 0.01-2% wt/wt.

Preferably, the molar ratio of silane:acid is between 1:100 and 50:1, more preferably between 10:1 and 1:10, most preferably, between 2:1 and 1:2. Preferably, the molar ratio of silane:acid is approximately 1:1.

Preferably, the solvent is at least 10 wt% of the total reaction mix at the start of the reaction, more preferably, at least 20 wt%, most preferably, at least 30 wt%. The reaction may be carried out at atmospheric pressure although both higher and lower pressures are also possible.

The reaction may also be performed without solvent and accordingly suitable ranges of solvent are 0-99 wt% of the total reaction mix, more preferably, 20-50 wt%, most preferably 30-40 wt%.

Preferably, R¹, R², R³, R⁴ and R⁵ each independently represent hydrogen, alkyl, alkynyl, aryl or aralkyl radicals optionally substituted as aforesaid in the first aspect of the present invention, more preferably, optionally substituted by one or more substituents independently selected from the group comprising alkyl, aralkyl, aryl, halogen, tertiary amino or amino alkyl radicals.

Preferably, R⁶ represents an hydrogen atom or an alkyl group.

Preferably, R⁷ represents an alkyl group, an aryl group or an aralkyl group.

Preferably, R¹, R², R³, R⁴, R⁵ each independently represent an alkyl, an aryl group or a hydrogen atom.

According to an embodiment of the present invention, R¹, R², R³, R⁴, R⁵, R⁶, R⁷ and R⁹ are each independently selected from the group comprising methyl, ethyl, propyl, isopropyl, isobutyl, n-butyl, sec-butyl, t-butyl. Preferably, R⁴, R⁵, R⁶ and R⁹ are methyl and R⁷ is hydrogen.

Preferably, R⁸ represents a hydrogen atom or an alkyl group.

When R¹, R² and R³ are alkyl groups they are preferably, independently selected from the group consisting of C1 to C8 alkyl groups, preferably C3 and C4, more preferably isopropyl and n-butyl. The said alkyl groups may be branched or linear.

Preferably, each n in formulas I, II or III is independently 0 to 50, more preferably, 0 to 10, most preferably 0 to 5. Especially preferred values for n are selected from 0, 1, 2, 3, 4 or 5.

As used herein, the term "polymer" refers to the product of a polymerisation reaction, and is inclusive of homopolymers, copolymers, terpolymers, etc.

As used herein, the term "copolymer" refers to polymers formed by the polymerisation reaction of at least two different monomers.

As used herein, the term "independently selected" or "independently represent" indicates that the each radical R so described, can be identical or different. For example each R⁴ in compound of formula (I) may be different for each value of n.

The term "alkyl", as used herein unless otherwise defined, relates to saturated hydrocarbon radicals having straight, branched, cyclic or polycyclic moieties or combinations thereof and contains 1 to 20 carbon atoms, preferably 1 to 10 carbon atoms, more preferably 1 to 8 carbon atoms, still more preferably 1 to 6 carbon atoms, yet more preferably 1 to 4 carbon atoms. Examples of such radicals include may be independently selected from methyl, ethyl, n-propyl, isopropyl n-butyl, isobutyl, set-butyl, tert-butyl, 2-methylbutyl, pentyl, iso-amyl, hexyl, cyclohexyl, 3-methylpentyl, octyl and the like.

The term "alkenyl", as used herein, relates to hydrocarbon radicals having one or several double bonds, having straight, branched, cyclic or polycyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. Examples of alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like.

The term "alkynyl", as used herein, relates to hydrocarbon radicals having one or several triple bonds, having straight, branched, cyclic or polycyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. Examples of alkynyl radicals include ethynyl, propynyl, (propargyl), butynyl, pentynyl, hexynyl and the like.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. Said radical may be optionally substituted with one or more substituents independently selected from alkyl, alkoxy, halogen, hydroxy or amino radicals. Examples of aryl includes phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like.

The term "aralkyl" as used herein, relates to a group of the formula alkyl-aryl, in which alkyl and aryl have the same meaning as defined above. Examples of aralkyl radicals include benzyl, phenethyl, dibenzylmethyl, methylphenylmethyl, 3- (2-naphthyl)-butyl, and the like.

Examples of the ethylenically unsaturated part of formula (I) may include but are not limited to (meth)acrylate, itaconate, methyl fumarate, methyl maleate, n-butyl fumarate, n-butyl maleate, amyl fumarate, amyl maleate, and the like and polymers or copolymers thereof, wherein methacrylate or acrylate is herein collectively referred to as a "(meth)acrylate". In a preferred embodiment, said ethylenically unsaturated part of formula (I) is (meth)acrylate, and copolymers or polymers thereof.

Examples of the organosilylated carboxylate monomers of general formula (I) include but are not limited to tri-n-butyl 1-(meth)acryloyloxy-silane, tri-n-propyl-1-(meth)acryloyloxy silane, tri-t-butyl-1-(meth)acryloyloxy-silane, tri-isopropyl-1-(meth)acryloyloxy-silane, tri-isobutyl-1-(meth)acryloyloxy-silane, tri-methyl-1-(meth)acryloyloxy-silane, triethyl- 1-(meth)acryloyloxy-silane, tribenzyl- 1-(meth)acryloyloxy-silane, triamyl- 1-(meth)acryloyloxy-silane, triphenyl- 1-(meth)acryloyloxy-silane, nonamethyl-1-(meth)acryloyloxy-tetrasiloxane, nonaethyl-1-(meth)acryloyloxy-tetrasiloxane, nona-t-butyl-1-(meth)acryloyloxy-tetrasiloxane, nonabenzyl-1-(meth)acryloyloxy-tetrasiloxane, nona-isopropyl-1-(meth)acryloyloxy-tetrasiloxane, nona-n-propyl-1-(meth)acryloyloxy-tetrasiloxane, nona-isobutyl-1-(meth)acryloyloxy-tetrasiloxane, nona-amyl-1-(meth)acryloyloxy-tetrasiloxane, nona-n-butyl-1-(meth)acryloyloxy-tetrasiloxane, nona-dodecyl-1-(meth)acryloyloxy-tetrasiloxane, nona-hexyl-1-(meth)acryloyloxy-tetrasiloxane, nona-phenyl-1-(meth)acryloyloxy-tetrasiloxane, nona-octyl-1-(meth)acryloyloxy-tetrasiloxane, undecamethyl-1-(meth)acryloyloxy-pentasiloxane, undecaethyl-1-(meth)acryloyloxy-pentasiloxane, undeca-t-butyl-1-(meth)acryloyloxy-pentasiloxane, undecabenzyl-1-(meth)acryloyloxy-pentasiloxane, undeca-isopropyl-1-(meth)acryloyloxy-pentasiloxane, undeca-n-propyl-1-(meth)acryloyloxy-pentasiloxane, undeca-isobutyl-1-(meth)acryloyloxy-pentasiloxane, undeca-amyl-1-(meth)acryloyloxy-pentasiloxane, undeca-n-butyl-1-(meth)acryloyloxy-pentasiloxane, undeca-dodecyl-1-(meth)acryloyloxy-pentasiloxane, undeca-hexyl-1-(meth)acryloyloxy-pentasiloxane, undeca-phenyl-1-(meth)acryloyloxy-pentasiloxane, undeca-octyl-1-(meth)acryloyloxy-pentasiloxane tridecamethyl-1-(meth)acryloyloxy-hexasiloxane, tridecaethyl-1-(meth)acryloyloxy-hexasiloxane, trideca-t-butyl-1-(meth)acryloyloxy-hexasiloxane, tridecabenzyl-1-(meth)acryloyloxy-hexasiloxane, trideca-isopropyl-1-(meth)acryloyloxy-hexasiloxane, trideca-n-propyl-1-(meth)acryloyloxy-hexasiloxane, trideca-isobutyl-1-(meth)acryloyloxy-hexasiloxane, trideca-amyl-1-(meth)acryloyloxy-hexasiloxane, trideca-n-butyl-1-(meth)acryloyloxy-hexasiloxane, trideca-dodecyl-1-(meth)acryloyloxy-hexasiloxane, trideca-hexyl-1-(meth)acryloyloxy-hexasiloxane, trideca-phenyl-1-(meth)acryloyloxy-hexasiloxane, trideca-octyl-1-(meth)acryloyloxy-hexasiloxane and polymers thereof.

In formula I, the ethylenic unsaturated part is most preferably selected from acrylate and methacrylate.

The invention will now be described by way of illustration only and with reference to the accompanying examples.

In the following examples, NMR data has been determined in CDCl₃ and are expressed as delta versus TMS.

### Example 1:

A mixture of 20 g of methoxytributyl silane (CAS RN:15811-64-0), 8.12 g of methacrylic acid, 1.89 g of N,N-dimethylformamide, 0.2 g of p-methoxyphenol and 30 ml of heptane is heated until methanol is completely distilled at atmospheric pressure (b.p. of the azeotrope: 59.1°C) to furnish tributylsilyl methacrylate (89%).

Tri-n-butylsilyl methacrylate: ¹³C NMR : 167.8, 137.9, 126.0, 26.7, 25.5, 18.5, 13.5, 14.0; ²⁹ Si NMR : 23.1; IR (film): 2959, 2927, 1703, 1334, 1174, 886, 766 cm⁻¹.

### Example 2:

A mixture of 10 g of tributyl silanol (CAS RN: 18388-85-7), 4.26 g of methacrylic acid, 0.94 g of N,N-dimethylformamide, 0.1 g of p-methoxyphenol and 10 ml of heptane is heated until water is completely distilled at atmospheric pressure (b.p. of the azeotrope: 79.2°C) to furnish tributylsilyl methacrylate.

### Comparative Example:

A mixture of 10 g of methoxytributyl silane, 4.26 g of methacrylic acid, 1.3 g of Amberlyst A15 (sulfonic acid resin), 0.1 g of p-methoxyphenol and 10 ml of heptane is heated. After distillation of heptane, only slight amounts of tributylsilyl methacrylate are detected, hexabutyl disiloxane and methyl methacrylate are present as main products.

### Example 3:

A mixture of 10 g of tributyl silanol, 4.26 g of methacrylic acid, 0.58 g of formamide, 0.1 g of p-methoxyphenol and 10 ml of heptane is heated until water is completely distilled at atmospheric pressure (b.p. of the azeotrope: 79.2°C) to furnish tributylsilyl methacrylate.

### Example 4:

A mixture of 10 g of methoxytributyl silane, 4.26 g of methacrylic acid, 1.13 g of N,N-dimethyl acetamide, 0.1 g of p-methoxyphenol and 10 ml of heptane is heated until methanol is completely distilled'at atmospheric pressure (b.p. of the azeotrope: 59.1°C) to furnish tributylsilyl methacrylate.

### Example 5:

A mixture of 10 g of methoxytributyl silane, 4.26 g of methacrylic acid, 2.0 g of N-formyl Rosinamine (prepared as described in example 1 of WO00/55117) , 0.1 g of p-methoxyphenol and 10 ml of heptane is heated until methanol is completely distilled at atmospheric pressure (b.p. of the azeotrope: 59.1°C) to furnish tributylsilyl methacrylate.

### Example 6

0.274 g of tetrabutylammonium fluoride trihydrate and 30 ml of heptane were heated at 110°C in order to remove water by azeotropic distillation. 20 g of methoxytributyl silane, 8.12 g of methacrylic acid and 0.2 g of p-methoxyphenol were then added. The mixture was heated until methanol is completely distilled at atmospheric pressure (b.p. of the azeotrope: 59.1°C) for 2 h. Evaporation of the solvent under reduced pressure followed by vacuum distillation furnished pure tributylsilyl methacrylate.

### Example 7

0.179 g of tetrabutylammonium fluoride trihydrate and 20ml of heptane were heated at 110°C in order to remove water by azeotropic distillation. 10 g of triisopropylsilanol, 4.41 g of acrylic acid and 0.2 g of p-methoxyphenol were then added. The mixture was heated until the water is totally distilled at atmospheric pressure (b.p. of the azeotrope: 79.2°C) to furnish triisopropyl acrylate. Triisopropylsilyl acrylate: ¹³C NMR: 132.5, 130.4, 175.0, 12.3, 17.0; ²⁹Si NMR: 21.84; IR (film): 2948, 2870, 1708, 1620, 1465, 1403, 1290, 1209, 1046, 884, 818, 746 cm⁻¹.

### Example 8

0.132 g of tetrabutylammonium fluoride trihydrate and 20ml of heptane were heated at 110°C in order to remove water by azeotropic distillation. 13.8 g of nonamethyl-1-methoxy-tetrasiloxane (CAS: 78824-97-2), 4.41 g of methacrylic acid and 0.1 g of p-methoxyphenol were then added. The mixture was heated until the methanol is totally distilled at atmospheric pressure (b.p. of the azeotrope: 59.1°C) to furnish nonamethyl-1-methacryloyloxy-tetrasiloxane.
Nonamethyl-1-methacryloyloxy-tetrasiloxane: ¹³C NMR: 166.8, 126.3, 137.8, 18.1, 1.95, 1.24, 1.03, -0.13; ²⁹Si NMR: 7.3, - 8.8, -20.1, -21.6; IR (film) : 2963, 1730, 1372, 1260, 1083, 1045, 841, 809 cm⁻¹.

Comparative example 2 shows the behaviour of an uncatalysed reaction, the reaction is very slow and leads to a mixture of starting materials and MMA.

### Comparative example 2

A mixture of 20 g of methoxytributyl silane, 8.12 g of methacrylic acid, 0.2 g of p-methoxyphenol and 30 ml of heptane is heated. After 7 h at 165 °C only 0.15 eq. of methanol was distilled. Analysis of the reaction mixture by GC showed a mixture of starting materials, TBSiMA and methyl methacrylate.

### Example 9:

0.36 g of lithium hydroxide monohydrate and 20ml of heptane were heated at 110°C in order to remove water by azeotropic distillation. 20 g of methoxytributylsilane, 8.12 g of methacrylic acid and 0.2 g of p-methoxyphenol were then added. The mixture was heated is heated until the methanol is totally distilled at atmospheric pressure (b.p. of the azeotrope: 59.1°C) to furnish tributylsilyl methacrylate (88%).

The reaction temperatures for the above mentioned examples are as follows:-

| Example # | T° |
|---|---|
| 1 | 150-170°C |
| 2 | 120-130°C |
| 3 | 120-140°C |
| 4 | 130-150°C |
| 5 | 125-130°C |
| 6 | 110-120°C |
| 7 | 125-130°C |
| 8 | 110-135°C |
| 9 | 125-150°C |

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A process for the production of hydrocarbyl silyl unsaturated carboxylates of formula (I). 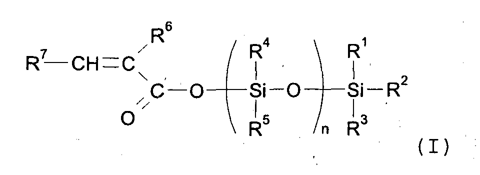 wherein
R¹, R², R³, R⁴, R⁵ each independently represent hydrogen, hydroxyl, alkyl, alkenyl, alkynyl, alkoxyl, aryl, aryloxyl, aralkyloxyl, -O-SiR¹R²R³, -O-(SiR⁴R⁵O)ₙ-SiR¹R²R³ or aralkyl radical optionally substituted by one or more substituents independently selected from the group comprising alkyl, alkoxyl, aralkyl, aralkyloxyl, aryl, aryloxyl, hydroxyl, halogen, amino or amino alkyl radicals, or may independently be an -O-C(O)-C(R⁶)=CHR⁷ group;
R⁶ represents a hydrogen atom, or an alkyl group, or (-R⁸-)ₒ C(O)OR¹⁰ wherein R¹⁰ represents an hydrogen atom, -(SiR⁴R⁵O)ₙ-SiR¹R²R³ wherein R¹, R², R³, R⁴, R⁵ are as already defined or an alkyl group; wherein R⁸ is independently selected from alkyl, alkenyl, alkynyl, aryl or an aralkyl radical optionally substituted by one or more substituents independently selected from alkyl, alkenyl, alkynyl, aralkyl, aryl, hydroxyl, halogen, amino or amino alkyl radicals; O=0 or 1;
R⁷ represents a hydrogen atom, or independently represents alkyl, aryl, aralkyl, alkenyl, alkynyl radical optionally substituted with the same radicals as defined for R⁶ above or R⁷ represents -COOR⁹ wherein R⁹ represents an hydrogen atom, an alkyl group or -(SiR⁴R⁵-O)ₙ- SiR¹R²R³ wherein R¹, R², R³, R⁴ and R⁵ are as already defined;
by reaction of an unsaturated carboxylic acid of formula (II) 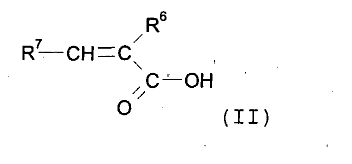 wherein R⁶ and R⁷ in formula (II) are as defined above; with a hydrocarbyl silyl compound of formula (III) 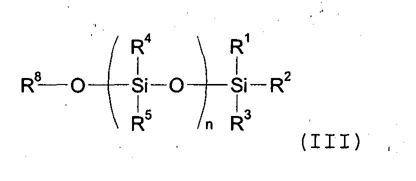 wherein R¹,R², R³, R⁴ and R⁵ are as defined above and R⁸ is an hydrogen atom, an alkyl, aralkyl or aryl, alkenyl or alkynyl group optionally substituted with one or more substituents selected from the equivalent substituents as detailed for R¹-R⁵ above; and each n above independently represents a number of dihydrocarbylsiloxane units from 0 to 1000; the said reaction being carried out in the presence of a silaphilic catalyst.

2. A process according to claim 1, wherein R¹, R², R³, R⁴, R⁵ each independently represent an alkyl, an aryl group or a hydrogen atom.

3. A process according to claim 1 or 2, wherein R¹, R², R³, R⁴, R⁵, R⁶ and R⁹ are each independently selected from the group comprising methyl, ethyl, propyl, isopropyl, isobutyl, n-butyl, sec-butyl, t-butyl.

4. A process according to claims 1, 2 or 3 wherein R⁴, R⁵, R⁶, R⁷ and R⁹ are independently methyl.

5. A process according to claims 1, 2, 3 or 4 wherein R¹, R² and R³ are n-butyl.

6. A process according to any preceding claim, wherein fluoride containing mineral or organic salts which comprise, but are not limited to, sodium fluoride, potassium fluoride, caesium fluoride or tetrabutyl ammonium fluoride (Bu₄NF); or are selected from N-methyl imidazole(NMI), N,N-dimethylamino pyridine(DMAP), hexamethylphosphoric triamide(HMPA), 4,4 dimethyl imidazole, N methyl-2-pyridone(NMP), pyridine N-oxide, triphenylphosphine oxide, 2,4 dimethyl pyridine, N-methyl-4-pyridone, dimethyl formamide(DMF), 3,5 dimethyl pyridine, N,N-dimethylethylene Urea(DMEU), N,N-dimethylpropylene Urea(DMPU), pyridine, imidazole, trimethylamine, dimethyl sulphoxide(DMSO), N-methyl pyrrolidinone(NMP), formamide, N-alkylformamides, N,N-dialkylformamides, acetamide, N-alkylacetamides, N,N-dialkylacetamides, alkylcyanides, N-methyl pyrrolidone, p-dimethylaminobenzaldehyde, 1,2-dimethyl imidazole, LiOH, LiStearate, NaI, MeONa or MeOLi; the term alkyl in the above N-alkyl and N,N-dialkyl .... amides and cyanides includes any linear, cyclic, bicyclic, polycyclic, alkyl aliphatic or aromatic group and in the case of N,N-compounds the alkyl may be the same or different, an example is N-formyl Rosinamine.

7. A process according to any preceding claim, wherein the catalysts are homogenous or heterogenous.

8. A process according to any preceding claim wherein the catalyst is able to coordinate reversibly with the silicon atom.

9. A process according to claim 8, wherein the catalyst is capable of forming a penta or hexa coordinated silicon species.

10. A process according to claim 1, wherein R¹, R², R³, R⁴, R⁵, R⁶, R⁸, R⁹ and R⁷ are alkyl radicals independently selected from methyl, ethyl, n-propyl, isopropyl n-butyl, isobutyl, set-butyl, tert-butyl, 2-methylbutyl, pentyl, iso-amyl, hexyl, cyclohexyl, 3-methylpentyl, octyl and the like.

11. A process according to claim 1, wherein the hydrocarbyl silyl esters of formula I are selected from tri-n-butyl 1-(meth)acryloyloxy-silane, tri-n-propyl-1-(meth)acryloyloxy silane, tri-t-butyl-1-(meth)acryloyloxy-silane, tri-isopropyl-1-(meth)acryloyloxy-silane, tri-isobutyl-1-(meth)acryloyloxy-silane, tri-methyl-1-(meth)acryloyloxy-silane, triethyl- 1-(meth)acryloyloxy-silane, tribenzyl- 1-(meth)acryloyloxy-silane, triamyl- 1-(meth)acryloyloxy-silane, triphenyl- 1-(meth)acryloyloxy-silane, nonamethyl-1-(meth)acryloyloxy-tetrasiloxane, nonaethyl-1-(meth)acryloyloxy-tetrasiloxane, nona-t-butyl-1-(meth)acryloyloxy-tetrasiloxane, nonabenzyl-1-(meth)acryloyloxy-tetrasiloxane, nona-isopropyl-1-(meth)acryloyloxy-tetrasiloxane, nona-n-propyl-1-(meth)acryloyloxy-tetrasiloxane, nona-isobutyl-1-(meth)acryloyloxy-tetrasiloxane, nona-amyl-1-(meth)acryloyloxy-tetrasiloxane, nona-n-butyl-1-(meth)acryloyloxy-tetrasiloxane, nona-dodecyl-1-(meth)acryloyloxy-tetrasiloxane, nona-hexyl-1-(meth)acryloyloxy-tetrasiloxane, nona-phenyl-1-(meth)acryloyloxy-tetrasiloxane, nona-octyl-1-(meth)acryloyloxy-tetrasiloxane, undecamethyl-1-(meth)acryloyloxy-pentasiloxane, undecaethyl-1-(meth)acryloyloxy-pentasiloxane, undeca-t-butyl-1-(meth)acryloyloxy-pentasiloxane, undecabenzyl-1-(meth)acryloyloxy-pentasiloxane, undeca-isopropyl-1-(meth)acryloyloxy-pentasiloxane, undeca-n-propyl-1-(meth)acryloyloxy-pentasiloxane, undeca-isobutyl-1-(meth)acryloyloxy-pentasiloxane, undeca-amyl-1-(meth)acryloyloxy-pentasiloxane, undeca-n-butyl-1-(meth)acryloyloxy-pentasiloxane, undeca-dodecyl-1-(meth)acryloyloxy-pentasiloxane, undeca-hexyl-1-(meth)acryloyloxy-pentasiloxane, undeca-phenyl-1-(meth)acryloyloxy-pentasiloxane, undeca-octyl-1-(meth)acryloyloxy-pentasiloxane tridecamethyl-1-(meth)acryloyloxy-hexasiloxane, tridecaethyl-1-(meth)acryloyloxy-hexasiloxane, trideca-t-butyl-1-(meth)acryloyloxy-hexasiloxane, tridecabenzyl-1-(meth)acryloyloxy-hexasiloxane, trideca-isopropyl-1-(meth)acryloyloxy-hexasiloxane, trideca-n-propyl-1-(meth)acryloyloxy-hexasiloxane, trideca-isobutyl-1-(meth)acryloyloxy-hexasiloxane, trideca-amyl-1-(meth)acryloyloxy-hexasiloxane, trideca-n-butyl-1-(meth)acryloyloxy-hexasiloxane, trideca-dodecyl-1-(meth)acryloyloxy-hexasiloxane, trideca-hexyl-1-(meth)acryloyloxy-hexasiloxane, trideca-phenyl-1-(meth)acryloyloxy-hexasiloxane, trideca-octyl-1-(meth)acryloyloxy-hexasiloxane and polymers thereof.

12. A process according to any preceding claim, wherein the catalysts are independably selected from DMF, DMSO, formamide, N-alkylformamides, N,N-dialkylformamides, acetamide, N-alkylacetamides, N,N-dialkylacetamides, N-Methyl pyrrolidone, p-dimethylaminobenzaldehyde, DMAP, N-methyl imidazole, 1,2-dimethyl imidazole, HMPA, DMPU, NaI, MeONa, MeOLi, Bu4NF, Ph3PO, LiOH, LiStearate and pyridine N-oxide.

13. A process according to any preceding claim, wherein the catalysts are present at a level of 0.001-100 mol% (mol/mol silane).

14. A process according to any preceding claim, wherein the reaction includes a polymeric inhibitor.

15. A process according to any preceding claim, wherein the reaction is carried out in a suitable solvent.

16. A process according to claim 15, wherein suitable solvents include non polar inert solvents, aliphatic hydrocarbons, cyclic and non cyclic ethers.

17. A process according to any claims 15 or 16, wherein the solvent is independently selected from pentane, hexane, heptane, toluene, xylene, benzene, mesitylene, ethylbenzene, octane, decane, decahydronaphthlene, diethyl ether, diisopropyl ether, diisobutyl ether or mixtures thereof.

18. A process according to any of claims 15-17, wherein the solvent causes no distillation of any of the reactants but allows reactive distillation.

19. A process according to any of claims 15-18, wherein the solvent forms a low boiling azeotrope with the distilled R⁸OH.

20. A process according to any of claims 15-19, wherein the solvents are independently selected from pentane, hexane, heptane, toluene and xylene.

21. A process according to any preceding claim, wherein the reaction is carried out in the range 0°C - 200°C.

22. A process according to any preceding claim, wherein a polymerisation inhibitor is present in the range 0.001-10% wt/wt of the total reaction mix.

23. A process according to any preceding claim, wherein the molar ratio of silane:acid is between 1:100 and 50:1.

24. A process according to any preceding claim, wherein the solvent is at least 10 wt% of the total reaction mix at the start of the reaction.

25. A hydrocarbyl silyl monomer as defined in formula I produced by a process in accordance with any of claims 1-24.

26. A process according to claim 1, wherein the number of (alk)acryloyl groups in formula I is less than 4.

27. A process according to claim 1, wherein the number of (alk)acryloyl groups in formula I is less than 1.

28. A process according to claim 1, wherein when R¹⁰ represents alkyl or hydrogen in formula II, it represents - (SiR⁴R⁵O-)ₙSiR¹R²R³ in formula I, wherein n and R¹-R⁵ are as defined previously.

29. A process according to claim 1, wherein when R¹, R², R³, R⁴ or R⁵ are aryloxyl, alkaryloxyl, alkoxyl or hydroxyl in formula III, they may represent or -O-C(O)-C(R⁶)=CHR⁷ in formula I.

30. A process according to claim 1, wherein where R⁹ represents an alkyl group or an hydrogen atom in formula (II), it may represent -(SiR⁴R⁵O)ₙ-SiR¹R²R³ in formula (I).

31. A process according to any of claims 1-6 or 8-30 wherein said catalyst may be a metal alkoxide, an organic tin compound or a boron compound or cyclic 1,3,5-triisopropoxycyclotrialuminoxane and the like.
